# EUROPÄISCHE PATENTSCHRIFT

(11) **EP 2 694 939 B1**
(45) Veröffentlichungstag und Bekanntmachung des Hinweises auf die Patenterteilung: **02.03.2016**
(21) Anmeldenummer: 12737562.4
(22) Anmeldetag: 19.07.2012
(51) Int. Cl.: G01M 13/02

(54) **GETRIEBEVERSPANNENDES VERFAHREN ZUM MESSEN UND PRÜFEN EINES GETRIEBES, INSBESONDERE EINES DOPPELKUPPLUNGSGETRIEBES**
TRANSMISSION-PRELOADING METHOD FOR MEASURING AND TESTING A TRANSMISSION, IN PARTICULAR A DOUBLE CLUTCH TRANSMISSION
PROCÉDÉ PERMETTANT DE MESURER ET DE CONTRÔLER UNE TRANSMISSION , EN PARTICULIER UNE TRANSMISSION À DOUBLE EMBRAYAGE

(30) Priorität: 20.07.2011 DE 102011108013
(43) Veröffentlichungstag der Anmeldung: 12.02.2014
(73) Patentinhaber: ThyssenKrupp System Engineering GmbH, 74076 Heilbronn (DE)
(72) Erfinder: DEWITZ, Ingo, 30519 Hannover (DE)
(74) Vertreter: Loock, Jan Pieter
(86) Internationale Anmeldenummer: PCT/EP2012/064238
(87) Internationale Veröffentlichungsnummer: WO 2013/011109

(56) Entgegenhaltungen:
- DE-A1- 19 537 639
- DE-A1- 19 934 486
- US-A- 5 537 865

## Beschreibung

Die Erfindung betrifft ein getriebeverspannendes Verfahren zum Messen und Prüfen eines mindestens zwei Teilgetriebe aufweisenden Getriebes, insbesondere eines Doppelkupplungsgetriebes, bei dem mittels einer bezüglich des Getriebes externen und bezüglich eines Fahrbetriebs der Antriebseinheit ein Drehmoment in das insbesondere Doppelkupplungsgetriebe eingeleitet wird.

Unter "Fahrbetrieb" ist ein Betrieb gemeint, der einem Fahrbetrieb eines Fahrzeugs entspricht, bei dem eine Antriebseinheit, insbesondere eine motorische Antriebseinheit, über Kupplungen Drehmomente in ein Doppelkupplungsgetriebe einbringt, wobei diese Drehmomente letztlich dann über eine Abtriebseinheit beispielsweise und insbesondere über an einem Fahrzeug befestigte Räder und deren Wellen abgeleitet werden.

Somit wird im Nichtfahrbetrieb, nämlich im Parkbetrieb, die Abtriebseinheit, nämlich die Räder nebst der dazugehörenden Wellen, zur Antriebseinheit im physikalischen Sinne, da dann entsprechende Drehmomente über die Reifen und Wellen auf eine Parksperre mit in der Regel eingreifendem Klinkenelement ins Doppelkupplungsgetriebe eingeleitet werden, wobei jedoch erfindüngsdefinitionsgemäß es sich hierbei nach wie vor um eben eine Abtriebseinheit handelt, da sich dieser Begriff auf den Fahrbetrieb und nicht den Parkbetrieb bezieht.

Üblicherweise werden Getriebe, auch Doppelkupplungsgetriebe, von einem bei getriebeverspannenden Prüf- und Messschritten bezüglich des Getriebes externen Antriebsmotor angetrieben, so dass ein Drehmoment in das Getriebe eingeleitet wird. Außerdem ist es aus dem Stand der Technik üblich, dass bei getriebeverspannenden Prüf- und Messschritten, insbesondere dem NVH-Test, Parksperrentest und der Aufnahme einer Kupplungskennlinie, wiederum bezüglich des Getriebes extern und bezüglich des Fahrbetriebs in der Regel ein Abtriebsmotorvorgesehen ist, so dass das in der Regel im Fahrbetrieb durch den Antriebsmotor in das Getriebe eingeleitete Drehmoment wiederum außerhalb des Getriebes im Abtriebsmotor abgetrieben wird, wobei bei der Parksperrenprüfung dann der klassische Abtriebsmotor bei der eigentlichen Prüfung als Antriebsmotor fungiert, um ein entsprechendes Drehmoment in die Parksperre bzw. dessen Klinkenelement in das Getriebe einzuleiten.

Je nach Geometrie des Getriebes befinden sich Antriebsmotor, Getriebe und Abtriebsmotor in einer Linie, wobei diese jedoch auch parallel oder im rechten Winkel oder versetzt angeordnet sein können, je nach Getriebegeometrie.

Bei all diesen Prüfungen werden somit außerhalb des zu prüfenden Getriebes in der Regel mindestens zwei Einheiten, nämlich eine Abtriebseinheit und eine Antriebseinheit, notwendig, die recht sperrig sind und somit in einer diesbezüglichen Getriebeprüf- und Messvorrichtung und selbstverständlich auch bezüglich Doppelkupplungsgetriebe, notwendig sind, zumal dies mit nicht unerheblichen Investitionen verbunden ist.

Aus dem oben genannten ergibt sich somit die Aufgabenstellung bzw. das zugrundeliegende Problem der vorliegenden Erfindung dahingehend, die oben genannten Nachteile zumindest teilweise zu vermeiden bzw. zu minimieren, insbesondere ein getriebeverspannendes Verfahren zum Messen und Prüfen eines mindestens zwei Teilgetriebe aufweisenden Getriebes, insbesondere Doppelkupplungsgetriebes, und eine entsprechende Prüf- und Messvorrichtung bereitzustellen, die wenig Raumvolumen verbraucht und das Verfahren kostengünstig durchführbar bzw. die Vorrichtung herstellbar ist.

Dieses Problem bzw. diese Aufgabe wird erfindungsgemäß gelöst durch ein Verfahren nach Anspruch 1 und durch einen Prüfstand nach Anspruch 12.

Das Dokument DE 19934486 A1 offenbart die Präambeln der Ansprüche 1, 6 und 12.

Das erfindungsgemäße Verfahren und der erfindungsgemäße Prüfstand haben gegenüber dem Stand der Technik den Vorteil, dass die interne Komponente des zu prüfenden Getriebes genutzt wird, um eine Verspannung im Getriebe zu erzeugen. Die Verspannung wird erzeugt, indem die interne Komponente als Bremse, insbesondere als Reibbremse, fungiert. Die interne Komponente arbeitet somit als Abtriebseinheit, so dass keine externe Abtriebseinheit, beispielsweise in Form eines weiteren Elektromotors, benötigt wird. Vorzugsweise umfasst die interne Komponente eine nur teilweise eingekuppelte Kupplung des Getriebes. Denkbar ist, dass hierbei eine erste Kupplungsseite der Kupplung mit einem ersten Getriebebereich des Getriebes gekoppelt ist, der durch die Antriebseinheit angetrieben wird, und dass eine zweite Kupplungsseite mit einem zweiten Getriebebereich gekoppelt ist, der mit einer anderen Übersetzung als der erste Getriebebereich über die Antriebseinheit angetrieben wird. Zwischen den Kupplungsscheiben der Kupplung wird eine als Bremse fungierende Reibkraft erzeugt, wodurch das Getriebe verspannt wird. In diesem verspannten Zustand des Getriebes können nun NVH-Körperschallmessungen durchgeführt werden. Ferner ist denkbar, dass in diesem verspannten Zustand des Getriebes eine Kupplungskennlinie aufgenommen wird, indem die Kupplung gerade soweit eingekuppelt wird, dass kein Schlupf an der Kupplung entsteht, und sodann das Kupplungsmoment in Abhängigkeit des Einkupplungsgrades bzw. des Einkupplungsweges bestimmt wird.

In einer bevorzugten Ausführungsform umfasst das Getriebe wenigstens ein Doppelkupplungsgetriebe mit einer ersten Teilkupplung, welche zum Einkoppeln eines ersten Teilgetriebes des Getriebes vorgesehen ist, und einer zweiten Teilkupplung, welche zum Einkoppeln eines zweiten Teilgetriebes des Getriebes vorgesehen ist. Das erste und das zweite Teilgetriebe sind zur Einstellung unterschiedlicher Gänge zwischen der Eingangswelle und der Ausgangswelle des Doppelkupplungsgetriebes vorgesehen. Die erste Teilkupplung wird vollständig eingekuppelt, um das Drehmoment der Antriebseinheit von einer Eingangswelle des Getriebes auf das erste Teilgetriebe zu übertragen. Die zweite Teilkupplung wird nur teilweise eingekuppelt. Dabei wird sowohl ein Gang des ersten Teilgetriebes, als auch ein Gang des zweiten Teilgetriebes eingelegt, um sowohl das erste Teilgetriebe, als auch das zweite Teilgetriebe mit einer Ausgangswelle des Getriebes zu koppeln. Das von der Antriebseinheit eingeleitete Drehmoment wird über die Ausgangswelle vom ersten Teilgetriebe auf das zweite Teilgetriebe übertragen. Da der eingelegte Gang des ersten Teilgetriebes zwangsläufig eine andere Übersetzung als der eingelegte Gang des zweiten Teilgetriebes aufweist, entsteht an der zweiten Teilkupplung eine Drehzahldifferenz zwischen den Kupplungsscheiben. Diese Drehzahldifferenz führt dazu, dass ein Schlupf an der zweiten Teilkupplung entsteht und die zweite Teilkupplung somit als Reibbremse fungiert. In diesem Zustand werden die oben beschriebenen NVH-Messungen durchgeführt und/oder die Kupplungskennlinie aufgenommen. Vorzugsweise wird ein Wechsel zwischen den Einkupplungsgraden der ersten und zweiten Teilkupplungen durchgeführt, d.h. die erste Teilkupplung wird nach einer Zeitspanne vom vollständig eingekuppelten (schlupffreien) Zustand in den nur teilweise eingekuppelten (schlupfbehafteten) Zustand überführt, während die zweite Teilkupplung vom nur teilweise eingekuppelten (schlupfbehafteten) Zustand in den vollständig eingekuppelten (schlupffreien) Zustand überführt wird, um einen Wechsel zwischen einem Zug- und Lastbetrieb zwischen den eingreifenden Zahnrädern des ersten und zweiten Teilgetriebes zu simulieren.

Ein weiterer Gegenstand der vorliegenden Erfindung ist ein Verfahren zum Prüfen eines Getriebes, insbesondere eine Doppelkupplungsgetriebes, wobei mittels einer bezüglich des Getriebes externen Antriebseinheit ein Drehmoment in das Getriebe eingeleitet wird und wobei das Getriebe in einen Betriebszustand gebracht wird, in welchem das Getriebe mittels wenigstens einer internen Komponente des Getriebes blockiert wird. In vorteilhafter Weise ist somit ein Parksperrentest durchführbar, in welchem geprüft wird, ob das Getriebe im Parkzustand bis zu einem definierten Maximalparkdrehmoment gesperrt bleibt. Die wenigstens eine interne Komponente umfasst vorzugsweise eine Parksperre, welche als Sperrhebel in Eingriff mit einem Getriebeelement gebracht wird, wodurch eine Rotation dieses Getriebeelements unterbunden wird. Alternativ ist denkbar, dass das Getriebe durch interne Komponenten in Form von Zahnrädern wenigstens zwei verschiedener Gänge des Getriebes gesperrt wird, indem die wenigstens zwei verschiedenen Gänge gleichzeitig eingelegt werden. Da die beiden Gänge zwangsläufig ein unterschiedliches Übersetzungsverhältnis aufweisen, wird das Getriebe durch das simultane Einlegen von zwei Gängen blockiert. In diesem Zustand ist die Kupplung des Getriebes vorzugsweise vollständig eingekuppelt und das durch die Antriebseinheit eingeleitete Drehmoment wird bis zu dem definierten Maximalparkdrehmoment erhöht. Hierbei wird geprüft, ob das Getriebe blockiert bleibt. Denkbar ist auch hier, dass das Getriebe eine erste Teilkupplung und eine zweite Teilkupplung umfasst, wobei die erste Teilkupplung zum Einkoppeln eines ersten Teilgetriebes vorgesehen ist und die zweite Teilkupplung zum Einkoppeln des zweiten Teilgetriebes vorgesehen ist. Die erste Teilkupplung wird nun vollständig eingekuppelt, während die zweite Teilkupplung vorzugsweise ausgekuppelt bleibt. Zur Durchführung des Parksperrentests werden nun zwei Gänge des ersten Teilgetriebes simultan eingelegt. Alternativ werden ein Gang des ersten Teilgetriebes und zwei Gänge des zweiten Teilgetriebes eingelegt. Das Getriebe wird somit entweder durch das erste Teilgetriebe oder durch das zweite Teilgetriebe gesperrt, so dass mittels der Antriebseinheit der Parksperrentest durchführbar ist.

Erfindungsgemäß wird das mindestens zwei Teilgetriebe aufweisende Getriebe, insbesondere Doppelkupplungsgetriebe, in einen Betriebszustand gebracht, in dem das eingeleitete Drehmoment mittels mindestens eines Bauteiles, beispielsweise und insbesondere mittels Reibbelagkupplungen der Teilkupplungen der Teilgetriebe, des Getriebes aufgenommen wird, derart, dass die Messung bzw. Prüfung frei von einer bezüglich des Getriebes externen und bezüglich eines Fahrbetriebs Abtriebseinheit ausgeführt wird. Aufgrund der obigen Erläuterungen ist im Nichtfahrbetrieb, also im Parkbetrieb, die Abtriebseinheit physikalisch gesehen dann die Antriebseinheit (s. o.), wobei jedoch erfindungs- und definitionsgemäß beim erfindungsgemäßen Verfahren ein Getriebe gemessen und geprüft wird im Fahr- aber auch im Parkbetrieb (der noch folgende und noch näher zu erläuternde Parksperrentest), so dass bezüglich des Parksperrentests - also im Nichtfahrbetrieb - die physikalischen Antriebs- und Abtriebseinheiten sich quasi umkehren, so dass zur Vereinheitlichung der Begrifflichkeiten als Referenz der Fahrbetrieb herangezogen worden ist, um Begriffsverwirrungen zwischen Fahrbetriebsprüfungen und -messungen und im Parkbetrieb stattfindenden Tests - eben der sogenannte Parksperrentest - zu vermeiden und ein- und dieselbe erfindungsgemäße Terminologie zu verwenden in Bezug auf Antriebs- und Abtriebseinheit. Erfindungsgemäß wird unter dem Begriff "ausgekuppelt" der Zustand bezeichnet, bei dem zwei Kupplungsscheiben vollständig zueinander außergriffig sind. Erfindungsgemäß wird unter dem Begriff "teilweise/partiell eingekuppelt" der Zustand bezeichnet, in dem zwei miteinander korrespondierende Kupplungsscheiben lediglich mit einem Teil ihrer maximal spezifizierten Kraft aufeinander gepresst werden und somit die entsprechende Kupplung lediglich partiell/teilweise eingekuppelt ist. Unter dem Begriff "vollständig eingekuppelt" ist erfindungsgemäß der Zustand zu verstehen, in dem zwei miteinander korrespondierende Kupplungsscheiben mit ihrer maximal spezifizierten Kraft aufeinander gepresst werden in Abhängigkeit von den Materialien und Geometrien der Kupplungsscheiben, damit das maximal übertragbare Drehmoment bestimmt wird. Somit ist es für den Fachmann selbstverständlich, dass es im physikalischen Sinne quasi keine Maximalkraft gibt, die zu einer "vollständigen Einkupplung" führt, da ab einem gewissen Zeitpunkt oberhalb des maximalen Kupplungsmomentes dann doch wieder Schlupf auftritt.

Ferner wird unter dem Begriff "Teilkupplung" eine zu einem Teilgetriebe eines Getriebes, das mindestens zwei Teilgetriebe aufweist, gehörende Kupplung verstanden.

Weiterhinwird erfindungsgemäß unter dem Begriff "Kupplungsmoment" das an einer Kupplung angreifende Drehmoment verstanden.

Unter "schlupfbehaftet" wird erfindungsgemäß der Zustand einer Kupplung verstanden, in der eine Drehzahldifferenz zwischen den beiden Kupplungsscheiben einer Kupplung auftritt. Somit tritt Schlupf auf, wobei durch die Reibung der Kupplungsscheiben aneinander Wärme an den Kupplungsscheiben erzeugt wird. Unter "schlupffrei" wird erfindungsgemäß der Zustand einer Kupplung verstanden, in dem keine Drehzahldifferenz zwischen den beiden Kupplungsscheiben einer Kupplung auftritt, so dass keine schlupfbedingte Wärme an den Kupplungsscheiben erzeugt wird.

Beispielsweise und insbesondere handelt es sich erfindungsgemäß beim getriebeverspannenden Verfahren zum Messen und Prüfen beispielsweise und insbesondere eines Doppelkupplungsgetriebes um einen sogenannten NVH-Test (NoiseVibrationHarshness; Geräuschprüfung im Getriebe im laufenden Betrieb, um Fehler festzustellen), um die Aufnahme einer Kupplungskennlinie sowie um den oben bereits erwähnten Parksperrentest.

Beim erfindungsgemäßen getriebeverspannenden Verfahren wird zum Messen und Prüfen eines beispielweise und insbesondere Doppelkupplungsgetriebes mittels einer bezüglich des Doppelkupplungsgetriebes externen und bezüglich eines Fahrbetriebes (siehe obige Erläuterungen) Antriebseinheit ein Drehmoment in das Doppelkupplungsgetriebe eingeleitet, wobei das Doppelkupplungsgetriebe in einen Betriebszustand gebracht wird, in dem das eingeleitete Drehmoment mittels mindestens eines Bauteiles des Doppelkupplungsgetriebes aufgenommen wird, derart, dass die Messung bzw. Prüfung frei von einem bezüglich des Doppelkupplungsgetriebes externen und bezüglich eines Fahrbetriebs Abtriebseinheit ausgeführt wird. Mit anderen Worten: Eine externe Abtriebseinheit zur Simulation eines tatsächlichen Fahrbetriebs wird nicht benötigt.

Bei einem NVH-Test (Geräuschprüfung des zu prüfenden Getriebes) wird ein schlupfbehafteter Abtrieb in mindestens einer Teilkupplung des Getriebes erzeugt durch schlupfbehaftetes, teilweises Einkuppeln mindestens einer Teilkupplung eines Teilgetriebes, wobei in jedem Teilgetriebe ein Gang eingelegt ist, wobei
a) die eine Teilkupplung des ersten Teilgetriebes schlupfbehaftet, teilweise eingekuppelt ist und die eine Teilkupplung des zweiten Teilgetriebes schlupffrei, teilweise bis vollständig eingekuppelt ist und keine Teilkupplung ausgekuppelt ist oder
b) die eine Teilkupplung des zweiten Teilgetriebes schlupfbehaftet, teilweise eingekuppelt ist und die eine Teilkupplung des ersten Teilgetriebes schlupffrei, teilweise bis vollständig eingekuppelt ist und keine Teilkupplung ausgekuppelt ist.

In beiden Fällen ist dann selbstverständlich in jedem Teilgetriebe ein Gang eingelegt, so dass die Erzeugung des benötigten Abtriebsmomentes durch Verspannen der beiden Teilgetriebe, also des Getriebes selbst, erzeugt wird. Durch die schlupfbehaftete Kupplung wird sichergestellt, dass sich die Teilgetriebe als solche nicht sperren, was beim NVH-Test nicht erlaubt ist, da über verschiedene Sensoren am Getriebe beim Durchfahren der einzelnen Gänge bei in der Regel konstantem Einkupplungsgrad der Teilkupplungen von einer Startdrehzahl bis zu einer vorher festgelegten Höchstdrehzahl akustische Artefakte erfasst werden, die auf Probleme und Störungen des insbesondere Doppelkupplungsgetriebes hinweisen. Beim NVH-Test werden in der Regel die unterschiedlichen Gänge durchgeschaltet, um die Zahnräder der einzelnen Gänge, aber auch der weiteren im Getriebe befindlichen Zahnräder und weiterer Elemente auf ihre volle Funktionsfähigkeit zu überprüfen.

Durch den Teileingriff der Kupplungsscheiben ineinander ist es naturgemäß möglich, dass dadurch quasi ein Teil des eingeleiteten Drehmomentes abtreibend in Wärme umgewandelt wird, die deshalb entsteht, da die Kupplungsscheiben als Reibbremse fungieren.

Weiterhin ist es vorteilhaft, wenn die beiden Varianten, in welcher Reihenfolge auch immer, sukzessive realisiert werden, um auf diese Weise die Zahnradpaarung des jeweiligen Ganges im Zug- und Schubbetrieb zu prüfen. Über den Wechsel der schlupfenden Teilkupplung "simuliert" man den Wechsel zwischen Zug- und Schubbetrieb.

In diesem Kontext ist es besonders vorteilhaft, wenn die Übersetzungen der eingelegten Gänge der beiden Teilgetriebe bei Nichtgleichheit - eine Nichtgleichheit ist erforderlich, da bei Gleichheit der Übersetzungen diese sich dann aufheben würden und letztlich sich keine Drehzahldifferenz zwischen den Kupplungsscheiben der partiell eingreifenden Kupplung bzw. der partiell eingreifenden Kupplungen einstellen würde, die jedoch aus oben genannten Gründen notwendig ist, um einen inneren Abtrieb zu gewährleisten, um auf diese Art und Weise auf eine externe Abtriebseinheit erfindungsgemäß verzichten zu können - ähnlich sind und diesbezüglich bei gehaltener Einkupplung der beiden Teilgetriebe die Drehzahldifferenz zwischen den Kupplungsscheiben der schlupfbehafteten Kupplung eines Teilgetriebes minimiert wird, da durch eine geringe Übersetzungsdifferenz der gleichzeitig eingelegten Gänge die Drehzahldifferenz zwischen den Kupplungsscheiben der Kupplung bzw. der Kupplungen gering gehalten und somit eine geringe Reibleistung auftritt, um auf diese Art und Weise die Kupplungen bzw. das zu überprüfende Getriebe mechanisch zu schonen.

Bei einem ersten Parksperrentest greift ein Sperrelement, beispielsweise und insbesondere in Form einer Klinke, in ein Teilgetriebe, beispielsweise und insbesondere in ein Zahnrad, welches über Wellen und Zahnräder mit einer Welle eines Teilgetriebes verbunden ist, diese sperrend ein, wobei die Antriebseinheit über dieses Teilgetriebe die Parksperreneinheit verspannt, wobei ein Gang dieses Teilgetriebes eingelegt ist und eine Teilkupplung dieses Teilgetriebes schlupfbehaftet oder schlupffrei, teilweise bis vollständig eingekuppelt ist, um in der Regel zu prüfen, ob das Sperrelement einem Park-Maximaldrehmoment standhält, also seine Funktion erfüllt. Die Teilkupplung des ersten Teilgetriebes kann jedoch auch vollständig eingekuppelt sein, wobei grundsätzlich das eingeleitete Drehmoment lediglich eine gewisse Obergrenze nicht überschreiten darf, damit auf der einen Seite sichergestellt ist, dass bei einem späteren Fahrzeug, das an einem Berg steht, dieses dann tatsächlich durch die Parksperre als solche gehalten wird und das Fahrzeug durch die Parksperre als solches auch parkend gehalten wird und auf der anderen Seite jedoch die mechanische Belastbarkeit nicht übertrieben hoch angesetzt wird, um eine eventuelle mechanische Beschädigung des Sperrelementes, der sogenannten Parksperre oder Parkklinke, zu vermeiden. Somit wird erfindungsgemäß ein gewisses Drehmoment der externen Antriebseinheit eingeleitet über eine Teilkupplung, wobei über einen eingelegten Gang des einen Teilgetriebes, formal betrachtet ab der Übersetzungsseite des eingelegten Ganges bereits abtreibend das Drehmoment bis zum Sperrelement weitergeleitet wird, um eben zu prüfen, ob das Sperrelement diesem Drehmoment standhält. Erfindungsgemäß ist somit eine externe Abtriebseinheit (wie oben erläutert in Bezug auf den Fahrbetrieb) nichtmehr notwendig, da das auf das Sperrelement zu applizierende Drehmoment nicht über die externe Abtriebseinrichtung aufgebracht, sondern über die externe Antriebseinrichtung durch die eine Teilkupplung und das eine Teilgetriebe hindurch aufgebracht wird.

Generell sei an dieser Stelle darauf hingewiesen, dass die Bezeichnung "erste und zweite Teilkupplung" bzw. "erstes und zweites Teilgetriebe" selbstverständlich beinhaltet, dass je nachdem, welches Getriebe man als erstes Teilgetriebe und welche Teilkupplung man als erste Teilkupplung definiert dann selbstverständlich die andere Teilkupplung und das andere Teilgetriebe dann als zweites Teilgetriebe und zweite Teilkupplung bezeichnet werden, so dass je nach Festlegung sich diese in absoluter Hinsicht auch umkehren können.

Bei einem weiteren Parksperrentest werden
a) mindestens zwei Gänge eines zweiten Teilgetriebes eingelegt und ein Gang eines ersten Teilgetriebes, wobei die Teilkupplung des ersten Teilgetriebes schlupf-behaftet oder schlupffrei, teilweise bis vollständig eingekuppelt ist, oder
b) mindestens zwei Gänge eines ersten Teilgetriebes eingelegt und ein Gang eines zweiten Teilgetriebes eingelegt, wobei die Teilkupplung des zweiten Teilgetriebes schlupfbehaftet oder schlupffrei, teilweise bis voll-ständig eingekuppelt ist,
um bei beiden Varianten zu prüfen, ob die jeweils zwei eingelegten Gänge einem Park-Maximaldrehmoment, also einem vorher festgelegten maximalen Drehmoment, dem parkend standgehalten werden muss, standhalten, als ob diese eine Parksperrenfunktion erfüllen.

Bei einer Ausführungsform des erfindungsgemäßen Verfahrens zur Aufnahme einer Kupplungskennlinie einer Teilkupplung in einem Teilgetriebe eines insbesondere Doppelkupplungsgetriebes wird ein schlupfbehafteter Abtrieb einer Teilkupplung erzeugt durch schlupfbehaftetes, teilweises Einkuppeln einer Teilkupplung eines Teilgetriebes, wobei in jedem Teilgetriebe ein Gang eingelegt ist, wobei
a) die eine Teilkupplung des ersten Teilgetriebes schlupfbehaftet, teilweise eingekuppelt ist und die eine Teilkupplung des zweiten Teilgetriebes schlupf-frei, teilweise bis vollständig eingekuppelt ist und keine Teilkupplung ausgekuppelt ist, wobei das Kupplungsmoment in Abhängigkeit des Einkupplungsgrades bzw. des Einkupplungsweges bestimmt wird, oder
b) die eine Teilkupplung des zweiten Teilgetriebes schlupfbehaftet, teilweise eingekuppelt ist und die eine Teilkupplung des ersten Teilgetriebes schlupffrei, teilweise bis vollständig eingekuppelt ist und keine Teilkupplung ausgekuppelt ist, wobei das Kupplungsmoment in Abhängigkeit des Einkupplungsgrades bzw. des Einkupplungsweges bestimmt wird.

Bei dieser Ausführungsform zur Aufnahme einer Kupplungskennlinie bewegen sich die jeweiligen Getriebeeingangswellen, während bei den nachfolgenden Varianten zur Aufnahme einer Kupplungskennlinie die Getriebeeingangswellen sich nicht drehen, da diese gesperrt sind.

In der Regel wird bei der Aufnahme der Kupplungskennlinie einer Teilkupplung in einem Teilgetriebe die Drehzahl der externen Antriebseinheit bzw. der entsprechenden Getriebeeingangswelle konstant gehalten.

Bei einer Variante des erfindungsgemäßen Verfahrens zur Aufnahme einer Kupplungskennlinie einer Teilkupplung in einem Teilgetriebe eines insbesondere Doppelkupplungsgetriebe werden mindestens zwei Gänge des einen Teilgetriebes eingelegt, wobei die Teilkupplung des Teilgetriebes schlupfbehaftet, teilweise bis vollständig eingekuppelt ist und das von der externen Antriebseinheit erzeugte Kupplungsmoment in Abhängigkeit des Einkupplungsgrades bzw. des Einkupplungsweges bestimmt wird. Durch die Sperrung des Teilgetriebes wegen der mindestens zwei eingelegten Gänge ist es möglich, das jeweilige Kupplungsmoment ohne Drehung der jeweiligen Getriebeeingangswellen im Gegensatz zur oben beschriebenen, ersten Ausführungsform zu bestimmen.

Bei einer Variante des erfindungsgemäßen Verfahrens zur Aufnahme einer Kupplungskennlinie einer Teilkupplung in einem Teilgetriebe ist mindestens ein Gang des einen Teilgetriebes eingelegt, und ein Sperrelement greift in dieses Teilgetriebe, häufig in ein Zahnrad, welches über Wellen und Zahnräder mit einer Welle dieses Teilgetriebes verbunden ist, dieses sperrend ein, wobei die Teilkupplung dieses Teilgetriebes schlupfbehaftet, zumindest teilweise eingekuppelt ist und das von der externen Antriebseinheit erzeugte Kupplungsmoment in Abhängigkeit des Einkupplungsgrades bzw. des Einkupplungsweges bestimmt wird. Durch die Sperrung des Teilgetriebes mittels Sperrelement ist es möglich, das jeweilige Kupplungsmoment zu bestimmen, ohne Drehung der jeweiligen Getriebeeingangswelle.

Bei einer weiteren Variante des erfindungsgemäßen Verfahrens wird bei einer Aufnahme einer Kupplungskennlinie in einem Teilgetriebe mindestens ein Gang des einen Teilgetriebes eingelegt und mindestens zwei Gänge eines weiteren Teilgetriebes eingelegt,
a) wobei eine Teilkupplung des weiteren Teilgetriebes ausgekuppelt ist, wobei eine Teilkupplung des einen Teilgetriebes schlupfbehaftet, teilweise bis vollständig eingekuppelt ist und das Kupplungsmoment in Abhängigkeit des Einkupplungsgrades bzw. des Einkupplungsweges bestimmt wird, oder
b) eine Teilkupplung des einen Teilgetriebes ausgekuppelt ist, wobei eine Teilkupplung des weiteren Teilgetriebes schlupfbehaftet, teilweise bis vollständig eingekuppelt ist und das Kupplungsmoment in Abhängigkeit des Einkupplungsgrades bzw. des Einkupplungsweges bestimmt wird.

Durch die Sperrung des ersten Teilgetriebes wegen der beiden eingelegten Gänge des zweiten Teilgetriebes und der Tatsache, dass die beiden Teilgetriebe miteinander mechanisch verbunden sind, ist eine Bestimmung des jeweiligen Kupplungsmomentes möglich ohne Drehung der jeweiligen Getriebeeingangswelle.

Eine erfindungsgemäße Getriebe-Prüf- und Messvorrichtung, insbesondere Doppelkupplungsgetriebe-Prüf- und Messvorrichtung, mit einer das zu prüfende, mindestens zwei Teilgetriebe aufweisende Getriebe, insbesondere Doppelkupplungsgetriebe, antreibenden Antriebseinheit, ist frei von einer bezüglich des zu prüfenden Getriebes externen und bezüglich eines Fahrbetriebs Abtriebseinheit.

Vorteilhaft ist es, wenn die erfindungsgemäße Getriebe-Mess- und Prüfvorrichtung, insbesondere für Doppelkupplungsgetriebe, derart eingerichtet ist, dass während eines getriebeverspannenden Verfahrens zum Messen und Prüfen eines mindestens zwei Teilgetriebe aufweisenden Getriebes, insbesondere Doppelkupplungsgetriebes, mittels einer bezüglich des Getriebes externen Antriebseinheit ein Drehmoment in das Getriebe eingeleitet wird, wobei das Getriebe in einen Betriebszustand gebracht wird bzw. bringbar ist, indem das eingeleitete Drehmoment mittels mindestens eines Bauteiles des Getriebes aufgenommen wird, derart, dass die Messung bzw. Prüfung frei von einer bezüglich des Getriebesexternen und bezüglich einer Fahrbetriebs Abtriebseinheit ausgeführt wird oder ausführbar ist.

Schließlich ist es vorteilhaft, wenn die erfindungsgemäße Vorrichtung derart eingerichtet ist, dass während des Betriebs das erfindungsgemäße Verfahren durchgeführt wird oder durchführbar ist. Die Einrichtungen zum Messen und Prüfen bestehen im Wesentlichen aus dem Stand der Technik bekannten einzelnen Einheiten zum Durchführen der oben genannten Tests, wobei insbesondere auch das gleichzeitige Einkuppeln verschiedener Gänge in einem oder auch mehreren Teilgetrieben oder beiden Teilgetrieben des Doppelkupplungsgetriebes möglich ist.

Auch andere getriebeverspannende Mess- und Prüfverfahren sind erfindungsgemäß denkbar, beispielsweise und insbesondere das Einfahren von Kupplungen, Kontrolle des Mikroschlupfes an der Kupplung und die Messung der Momentgleichförmigkeit. Selbstverständlich betreffen das erfindungsgemäße Verfahren, die Vorrichtung und die Verwendungen auch Getriebe, die mehr als zwei Teilgetriebe aufweisen.

Die Erfindung wird nunmehr anhand der nachfolgenden Zeichnungen nicht beschränkend näher erläutert, wobei die Figuren darstellen:
- Fig. 1: eine Prinzipskizze von Vorrichtungen zum Prüfen und Messen von Fahrzeuggetrieben;
- Fig. 2: eine Prinzipskizze eines Doppelkupplungsgetriebes in Längsbauweise;
- Fig. 3: eine Prinzipskizze eines Kraftflusses in dem in Fig. 2 gezeigten Doppelkupplungsgetriebes bei einem eingelegten ersten Gang;
- Fig. 4: eine Prinzipskizze des in Fig. 2 gezeigten Doppelkupplungsgetriebes während eines NVH-Tests bei einem eingelegten zweiten Gang;
- Fig. 5: eine Prinzipskizze des in Fig. 2 gezeigten Getriebes während einer Bestimmung der Kupplungskennlinie eines Teilgetriebes;
- Fig. 6: eine Prinzipskizze eines Doppelkupplungsgetriebes während eines Parksperrentests;
- Fig. 7: das in Fig. 2 gezeigte Doppe,lkupplungsgetriebe während eines erfindungsgemäßen NVH-Tests; aber auch bei einer Ausführungsform einer erfindungsgemäßen Bestimmung einer Kupplungskennlinie eines Teilgetriebes;
- Fig. 8: eine Prinzipskizze des in Fig. 6 gezeigten Doppelkupplungsgetriebes während eines erfindungsgemäßen Parksperrentests;
- Fig. 9: eine Prinzipskizze des in Fig. 6 gezeigten Doppelkupplungsgetriebes bei einer anderen Ausführungsform des erfindungsgemäßen Parksperrentests;
- Fig. 10: eine Prinzipskizze des in Fig. 2 gezeigten Doppelkupplungsgetriebes während der erfindungsgemäßen Bestimmung einer Kupplungskennlinie eines Teilgetriebes;
- Fig. 11: eine Prinzipskizze des in Figur 6 aufgezeigten Doppelkupplungsgetriebes bei einer anderen Ausführungsform der erfindungsgemäßen Bestimmung einer Kupplungskennlinie eines Teilgetriebes;
- Fig. 12: eine Prinzipskizze des in Figur 6 gezeigten Doppelkupplungsgetriebes bei einer weiteren Ausführungsform während der erfindungsgemäßen Bestimmung einer Kupplungskennlinie eines Teilgetriebes.

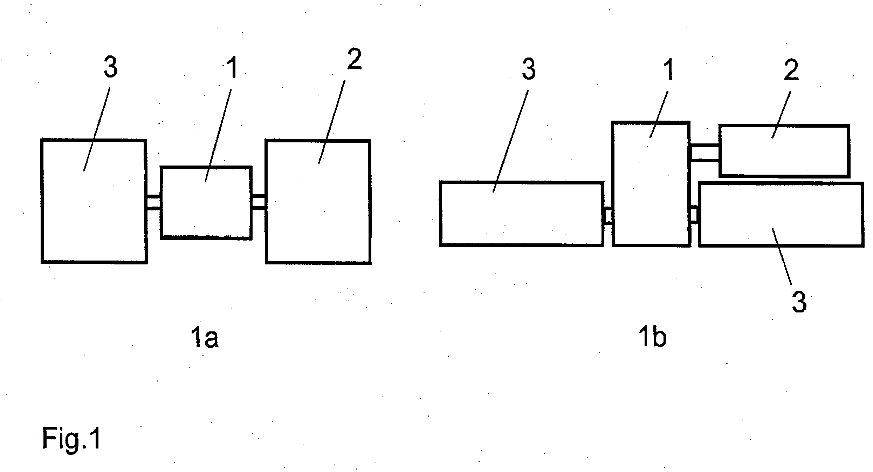

In Fig. 1 ist skizzenhaft das Prinzip der bisher üblichen Getriebeprüfvorrichtungen - auch Getriebeprüfstände genannt - aufgezeigt, bei denen ein zu prüfendes und messendes Getriebe 1 angetrieben wird über eine Antriebseinheit 2, häufig in Form eines Elektroantriebsmotors, so dass das eingeleitete Drehmoment über das Getriebe 1 schließlich abgetrieben wird über eine Abtriebseinheit 3, in der Regel über einen Elektromotor. Auf diese Art und Weise wird auf das zu prüfende und messende Getriebe 1 eine Verspannung gegeben, um dann entsprechende Prüfungen und Messungen, insbesondere NVH-Tests, Parksperrentests als auch Aufnahmen von Kupplungskennlinien, durchzuführen.

Unter Fig. 1 mit der Bezeichnung 1 a ist eine Getriebeprüfvorrichtung zu erkennen, in der ein Getriebe der Bauform Front längs geprüft und gemessen wird, während in Fig. 1 mit der Bezeichnung 1 b ein Getriebe der Bauform Front quer geprüft und gemessen wird, wobei in dieser Anordnung eine Abtriebseinheit 3 parallel zur Antriebseinheit 1 angeordnet ist und auf der ersten Abtriebseinheit 3 gegenüberliegenden Seite eine zweite Abtriebseinheit 3 angeordnet ist, wobei alle Antriebs-und Abtriebseinheiten elektromotorisch ausgeführt sind.

Diese aus dem Stand der Technik bekannten und üblichen Getriebeprüfvorrichtungen für Doppelkupplungsgetriebe, bei denen während der Messungen und Prüfungen das Getriebe verspannt sein muss, stellen relativ großvolumige Vorrichtungen dar, die zudem relativ kostspielig sind.

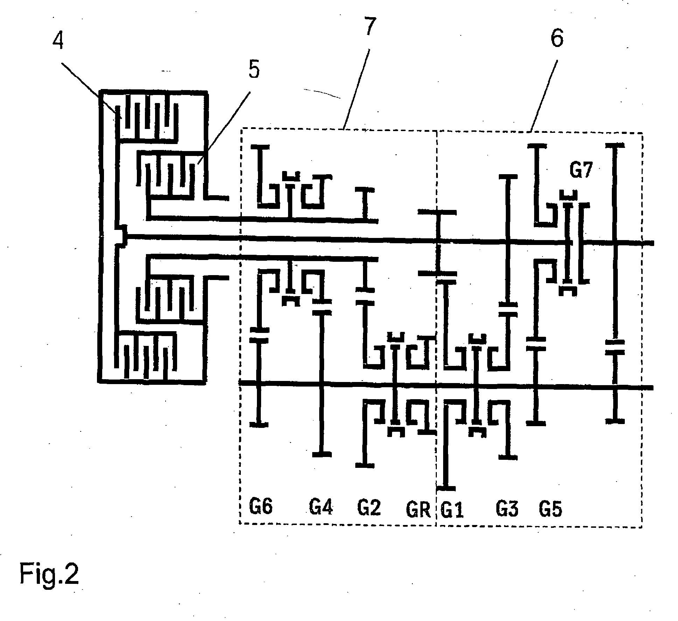

In Fig. 2 ist ein in Längsbauweise aufgebautes Doppelkupplungsgetriebe schematisch funktional wiedergegeben. Zu erkennen sind eine erste Teilkupplung 4 und eine zweite Teilkupplung 5 und deren Kupplungsscheiben, wobei die erste Teilkupplung 4 zumindest bei partiellem Einkuppeln der Kupplungsscheiben ineinander ein von einer (nicht abgebildeten) Antriebseinheit eingeleitetes Drehmoment weiterleiten in ein erstes Teilgetriebe 6, wobei dies für die zweite Teilkupplung 5 entsprechend für ein zweites Teilgetriebe 7 gilt. Ein Rückwärtsgang GR, ein zweiter Gang G2, ein vierter Gang G4 und ein sechster Gang G6 gehören zum zweiten Teilgetriebe, während ein erster Gang G1, ein dritter Gang G3, ein fünfter Gang G5 sowie ein siebenter Gang G7 zum ersten Teilgetriebe gehören.

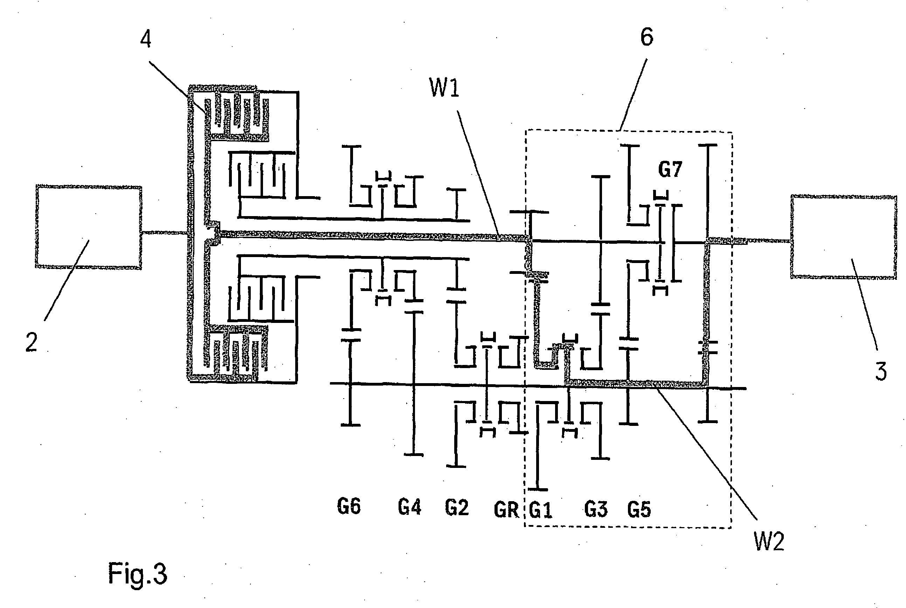

In Fig. 3 ist ein Kraftfluss des in Fig. 2 gezeigten Doppelkupplungsgetriebes zu erkennen, bei dem der erste Gang eingelegt ist. Das von der motorischen Antriebseinheit 2eingeleitete Drehmoment wird über die äußeren Kupplungsscheiben der Teilkupplung 4 durch den vollständig eingekuppelten Eingriff der inneren Kupplungsscheiben der Teilkupplung 4 ein- und weitergeleitet über eine Welle W1, die Teil des Teilgetriebes 6 ist, wobei das Drehmoment weitergeleitet wird über die Übersetzung des ersten Ganges weiter auf eine zweite Welle W2, um schließlich auf eine motorische Abtriebseinheit 3 weiterleitend abgetrieben zu werden.

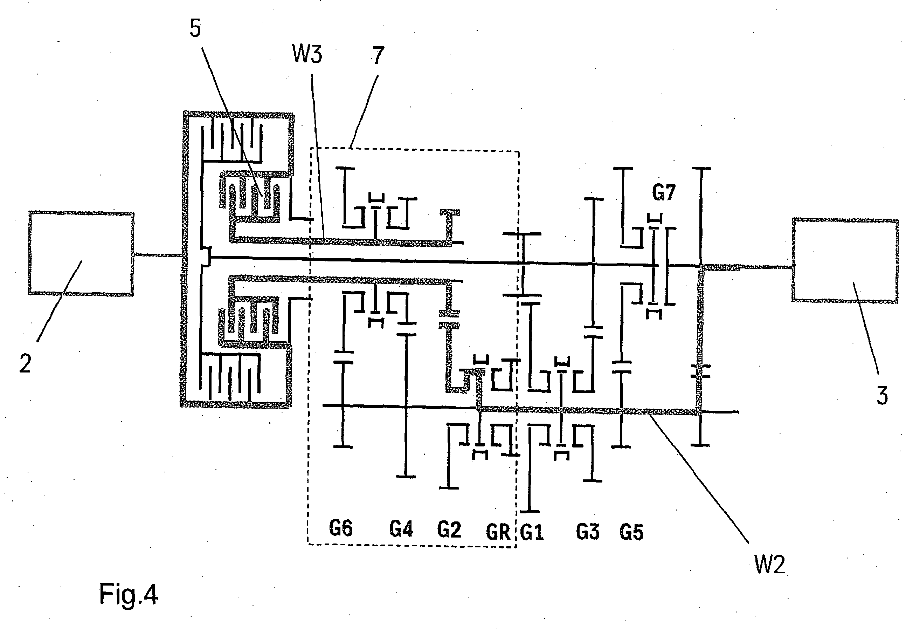

In Fig. 4 ist ein in Längsbauweise aufgebautes, zu prüfendes und messendes Doppelkupplungsgetriebe schematisch aufgezeigt, wobei in diesem Fall ein aus dem Stand der Technik üblicher NVH-Test (Geräuschmessung) durchgeführt wird. Dabei wird ein Drehmoment über eine elektromotorische Antriebseinheit 2 zunächst in die innere zweite Teilkupplung 5 eingeleitet, wobei in diesem Fall die Kupplungsscheiben vollständig eingriffig miteinander sind, so dass das mehr oder weniger vermindert einwirkende Drehmoment weitergeleitet wird auf eine Welle W3 als Teil des zweiten Teilgetriebes 7, über die Übersetzung des eingelegten zweiten Ganges auf eine Welle W2 als Teil des zweiten Teilgetriebes 7 auf die elektromotorische Abtriebseinheit 3. Ein entsprechender NVH-Test wird im eingelegten zweiten Gang durchgeführt zwischen einer Startdrehzahl bis zu einer zulässigen Höchstumdrehungszahl von in der Regel einigen Tausend Umdrehungen pro Minute. Dabei werden mittels üblicher Schwingungs- und Akustiksensoren und entsprechender elektronischer Aufzeichnungsgeräte die aufgenommenen Werte registriert und in situ oder später analysiert, um eventuelle Fehler im Getriebe festzustellen.

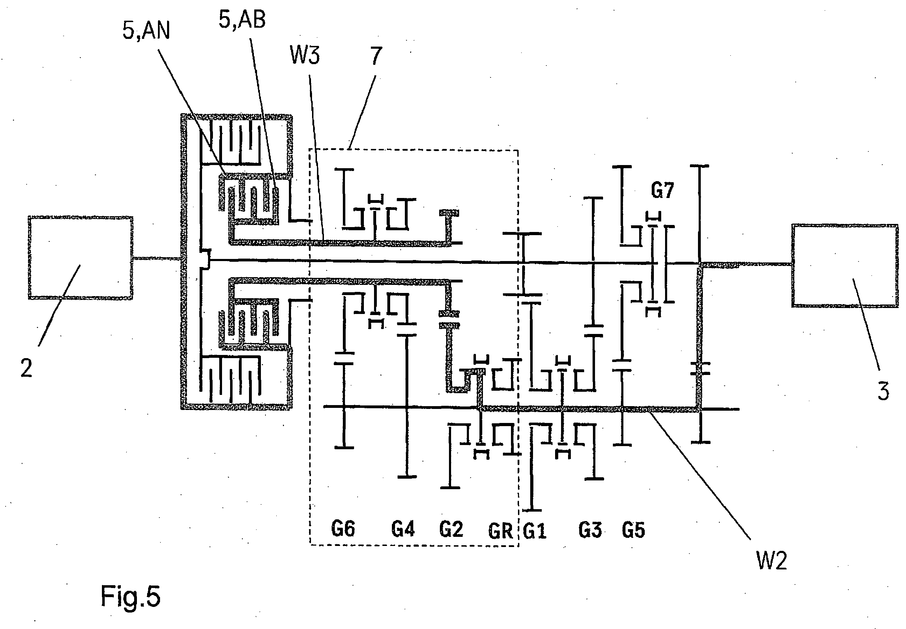

In Fig. 5 ist schematisch das oben bereits gezeigte Doppelkupplungsgetriebe in Längsbauweise aufgezeigt, wobei nunmehr das mittels der Antriebseinheit 2 eingeleitete Drehmoment in Abhängigkeit des Kupplungsgrades bzw. des Kupplungsweges aufgenommen wird, wobei die zweite Teilkupplung 5 bezüglich ihrer Kupplungsscheiben von außer- bis vollständig eingekuppelt ist, insbesondere mit einem unterschiedlichen Grad partiell eingekuppelt ist, um ebenso die kupplungsgrad- bzw. kupplungswegabhängige Drehmomentaufnahme zu erfassen. Hierbei wird durch das zum größten Teil teilweise Einkuppeln der Kupplungsscheiben in der zweiten Teilkupplung 5 ein Drehmoment weitergeleitet über eine Welle 3 des zweiten Teilgetriebes 7 über die Übersetzung des zweiten Ganges G2 auf eine weitere Welle W2, um schließlich auf die Abtriebseinheit 3 weitergeleitet zu werden. In diesem Fall wird eben die Kupplungskennlinie der Teilkupplung 5 bestimmt durch die Aufnahme des Kupplungsmomentes gegen den Kupplungsgrad bzw. den Kupplungsweg der Kupplungsscheiben zueinander der zweiten Teilkupplung 5. Dabei ist bei einer vollständigen Auskupplung das eingeleitete Drehmoment abtriebskupplungsseitig Null, während bei voller Einkupplung der Kupplungsscheiben zueinander das abtreibende Kupplungsmoment dem antreibenden einleitenden Moment der motorischen Antriebseinheit 2 nahezu entspricht.

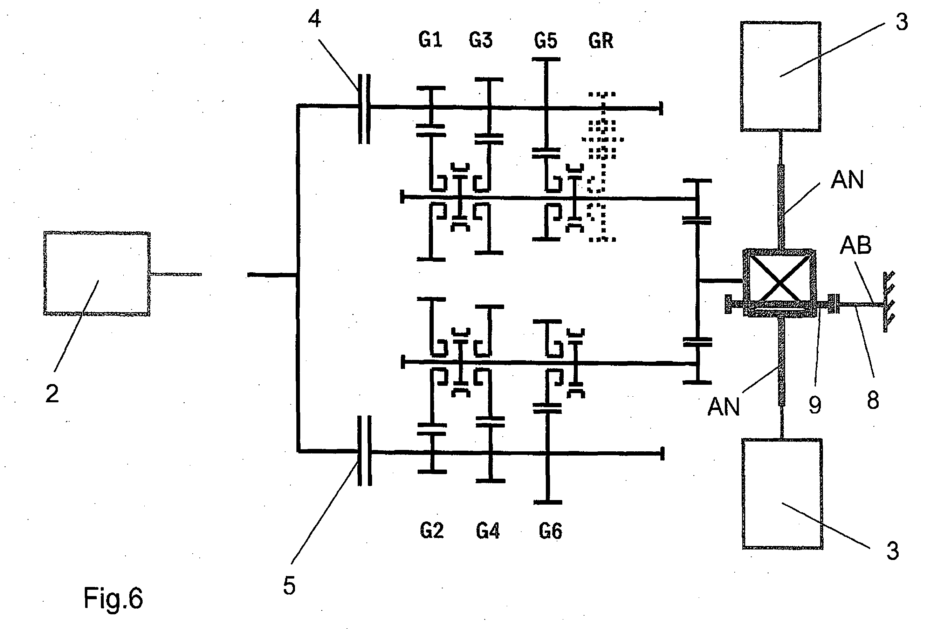

Auch in Fig. 6 ist ein aus dem Stand der Technik üblicher Parksperrentest in schematischer Hinsicht aufgezeigt, bei dem ein mechanisches Sperrelement 8 in ein Zahnrad oder Wellenelement 9, zumindest in ein drehendes Element eines Teilgetriebes sperrend eingreift, so dass anschließend über das Sperrelement 8 und an diesem über im Fahrbetrieb und somit nicht im Parkbetrieb fungierende Abtriebseinheit 3 nunmehr als Antriebseinheiten fungierend ein entsprechendes Drehmoment in das Sperrelement 8 einleitet, um zu prüfen, ob ein Drehmoment einer bestimmten Größe bis zu einem vorgegebenen Maximalwert in das Sperrelement und in das Getriebe sperrend eingeleitet und dort auch gehalten wird, um sicherzustellen, dass später im eingebauten Zustand in einem Fahrzeug dieses dann im Parksperrenmodus tatsächlich nicht mehr wegrollen kann.

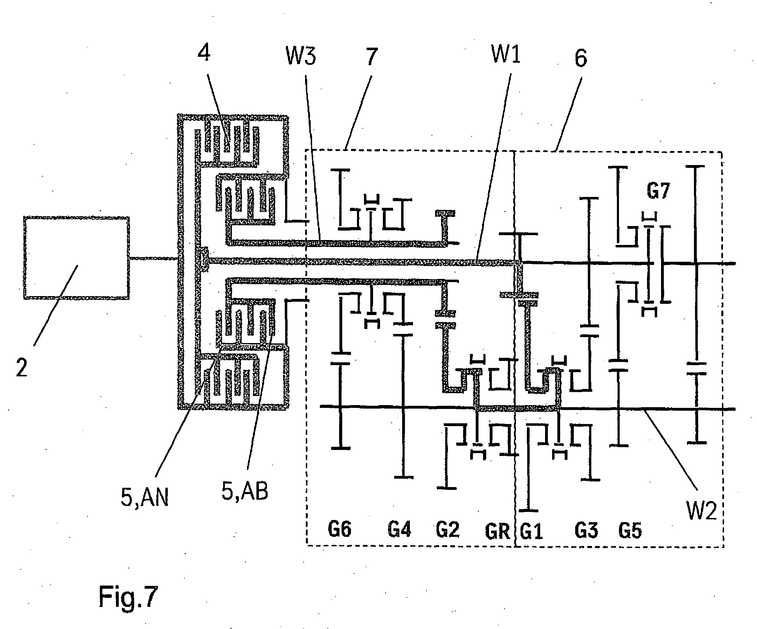

In Fig. 7 ist skizzenhaft das Funktionsprinzip hinsichtlich eines erfindungsgemäßen NVH-Testes aufgezeigt. Über eine motorische Antriebseinheit 2 wird ein Drehmoment eingeleitet in die erste Teilkupplung 4, die vollständig eingekuppelt ist, und in die zweite Teilkupplung 5, die lediglich teilweise eingekuppelt ist, wobei der erste Gang des ersten Teilgetriebes 6 und der zweite Gang des zweiten Teilgetriebes 7 eingelegt sind, so dass das über die erste Teilkupplung 4 eingeleitete Drehmoment in das erste Teilgetriebe 6 über die WelleW1 über die Übersetzung des ersten Ganges G1 dann abtriebig weitergeleitet wird durch die Übersetzung des zweiten Ganges G2, so dass dann das abtreibende Moment letztlich in Wärme umgewandelt wird durch das partielle Eingreifen der Kupplungsscheiben der zweiten Teilkupplung 5, so dass letztlich die eingebrachte Energie über das eingeleitete Drehmoment in Wärme umgewandelt wird, da die zweite Teilkupplung 5 bei diesem Test als Reibbremse fungiert. Auf diesem Weg ist erfindungsgemäß eine externe Abtriebseinrichtung 3 nicht notwendig beim Durchführen der entsprechenden Geräuschprüfung des Getriebes. In der Regel sind die Einkupplungsgrade der beiden Teilkupplungen während einer NVH-Messung konstant, wobei die Drehzahl der externen Antriebseinheit bzw. der jeweiligen Getriebegangswelle variiert.

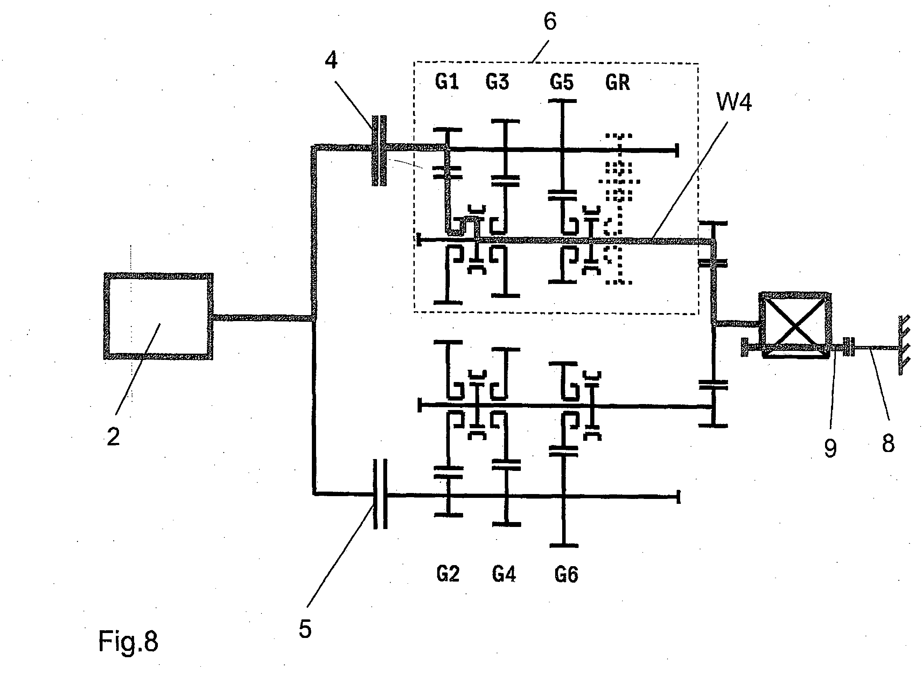

In Fig. 8 wird bei einem erfindungsgemäßen Parksperrentest über eine motorische Antriebseinheit 2 ein Drehmoment über eine vollständig eingekuppelte erste Teilkupplung 4 eingeleitet und weitergeleitet über die Übersetzung eines ersten eingelegten Ganges G1, weiter über eine Getriebewelle W4 eines ersten Teilgetriebes 6 und schließlich sperrend abgetrieben in einem Sperrelement 8 einer Parksperreneinheit, wobei das Sperrelement 8 beispielsweise und insbesondere klinkenförmig ausgestaltet ist und fest in mit einer Welle des ersten Teilgetriebes 6 verbundendes Zahnrad 9 sperrend eingreift. Statt eine ansonsten aus dem Stand der Technikübliche Abtriebseinheit dann als Antriebseinheit zu verwenden und von einer Abtriebseinheit dann als Antrieb fungierend ein Drehmoment direkt auf das Sperrelement zu applizieren, ist es erfindungsgemäß, dass durch ein von einer Antriebseinheit 2 erzeugtes entsprechendes Drehmoment durch ein Teilgetriebe des Doppelkupplungsgetriebes geleitet wird und auf diese Art und Weise eine ansonsten notwendige Abtriebseinheit, die bei einem klassischen Parksperrentest dann als Antriebseinheit fungiert, nicht notwendig ist.

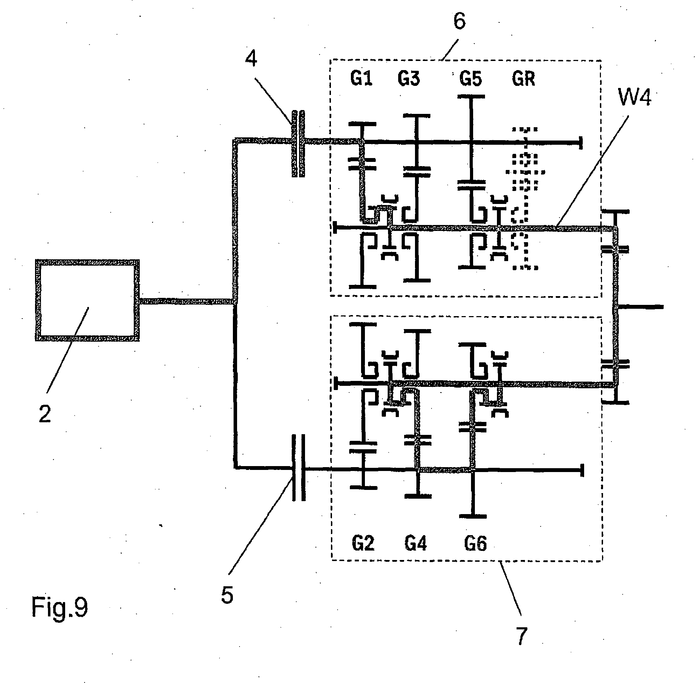

In Fig. 9 ist eine Variante des in Fig. 8 aufgezeigten Parksperrentests zu erkennen, wobei in diesem Fall in einem zweiten Teilgetriebe 7 zwei Gänge eingelegt sind, nämlich der vierte Gang G4 und der sechste Gang G6, so dass nunmehr das zweite Teilgetriebe 7 gesperrt ist, so dass ohne den Eingriff des Sperrelementes 8 ein entsprechendes Drehmoment über die eingekuppelte erste Teilkupplung 4 und das erste Teilgetriebe 6 auf das zweite Teilgetriebe 7 gegeben werden kann, um diese Art der Parksperre durch Einlegen von zwei Gängen in einem Teilgetriebe bei einem Doppelkupplungsgetriebe entsprechend durch Aufgeben eines maximalen Drehmomentwertes hinsichtlich der Parksperrenfunktion zu testen. Auch hier ist entsprechend mit der Ausführungsform zu Fig. 8 keine externe Abtriebseinheit notwendig.

In der Fig. 7 ist auch skizzenhaft das Funktionsprinzip hinsichtlich einer Ausführungsform der erfindungsgemäßen Aufnahme einer Kupplungskennlinie in einem Teilgetriebe aufgezeigt. Über eine motorische Antriebseinheit 2 wird ein Drehmoment eingeleitet in die erste Teilkupplung 4, die vollständig eingekuppelt ist, und in die zweite Teilkupplung 5, die lediglich teilweise eingekuppelt ist, wobei der erste Gang des ersten Teilgetriebes 6 und der zweite Gang des zweiten Teilgetriebes 7 eingelegt sind, so dass das über die erste Teilkupplung 4 eingeleitete Drehmoment in das erste Teilgetriebe 6 über die Welle W1 über die Übersetzung des ersten Ganges G1 dann abtriebig weitergeleitet wird durch die Übersetzung des zweiten Ganges G2, so dass dann das abtreibende Moment letztlich in Wärme umgewandelt wird durch das partielle Eingreifen der Kupplungsscheiben der zweiten Teilkupplung 5, so dass letztlich die eingebrachte Energie über das eingeleitete Drehmoment in Wärme umgewandelt wird, da die zweite Teilkupplung 5 bei diesem Test als Reibbremse fungiert. Auf diesem Weg ist erfindungsgemäß eine externe Abtriebseinrichtung 3 nicht notwendig beim Durchführen der entsprechenden Aufnahme einer Kupplungskennlinie einer Teilkupplung. In der Regel ist die Drehzahl der externen Antriebseinheit bzw. der jeweiligen Getriebeeingangswelle konstant, um dann bei Aufnahme einer Kupplungskennlinie einer Teilkupplung das Kupplungsmoment in Abhängigkeit des Einkupplungsgrades und somit eines variierenden Einkupplungsgrades zu bestimmen.

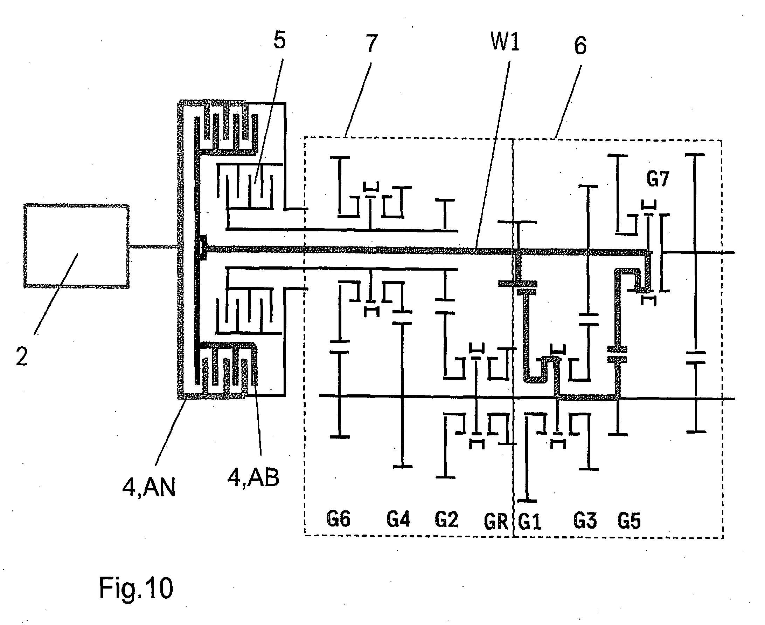

In Fig. 10 ist die erfindungsgemäße Bestimmung einer Kupplungskennlinie einer einzelnen Teilkupplung eines Doppelkupplungsgetriebes zu erkennen, wobei mittels einer motorischen Antriebseinheit 2 ein Drehmoment auf die erste Teilkupplung 4 gegeben wird, die teilweise eingekuppelt ist, wobei zwei Gänge des dazugehörigen ersten Teilgetriebes 6, nämlich der erste Gang G1 und der fünfte Gang G5 eingelegt sind, so dass das erste Teilgetriebe 6 blockiert/gesperrt ist, so dass dann hierdurch eine externe Abtriebseinheit 3 überflüssig ist, da durch das teilweise Einkuppeln der Kupplungsscheiben der ersten Teilkupplung 4 das eingeleitete Drehmoment und die damit eingebrachte Energie letztlich in Wärme innerhalb der ersten Teilkupplung 4 umgewandelt wird. Somit kann in Abhängigkeit des Einkupplungsgrades bzw. des Einkupplungsweges das entsprechend antriebige Kupplungsmoment, das im Wesentlichen dem abtriebigen Kupplungsmoment entspricht, gemessen werden, so dass eine entsprechende Kupplungskennlinie auf diesem Wege bestimmt wird. Selbstverständlich kann eine entsprechende Bestimmung auch für die zweite Teilkupplung 5 durchgeführt werden, wobei dann auch zwei Gänge des zweiten Teilgetriebes 7 sperrend eingelegt werden müssen, wobei es sich hierbei beispielsweise um den zweiten Gang G2 und den sechsten Gang G6 handeln kann.

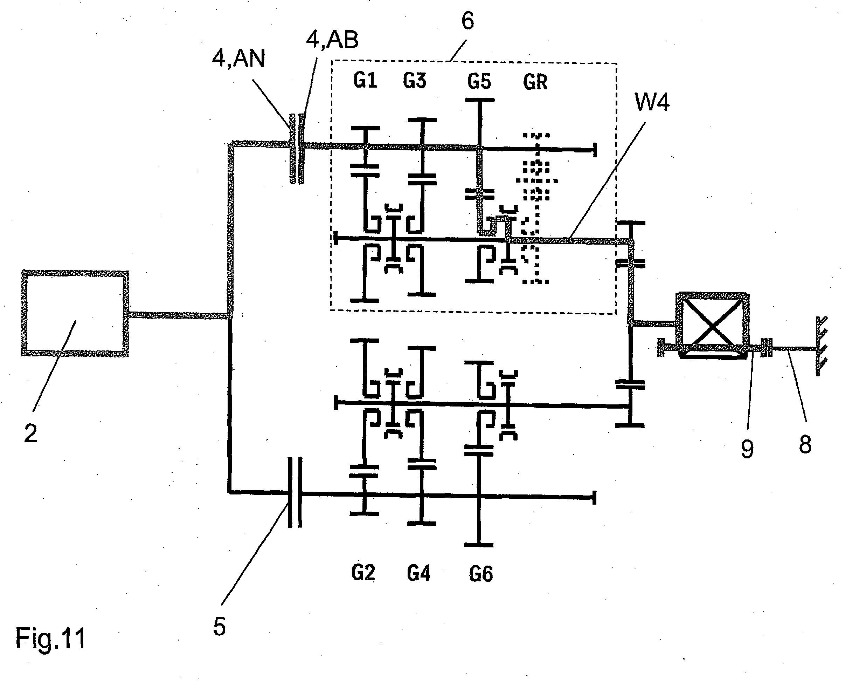

In Figur 11 ist eine erste Variante der erfindungsgemäßen Bestimmung einer Kupplungskennlinie einer einzelnen Teilkupplung eines Doppelkupplungsgetriebes zu erkennen, wobei mittels einer motorischen Antriebseinheit 2 ein Drehmoment auf die erste Teilkupplung 4 gegeben wird, die teilweise eingekuppelt ist, wobei ein fünfter Gang G5 des dazugehörigen ersten Teilgetriebes 6 eingelegt ist, wobei ein Sperrelement 8, nämlich eine Parksperrenklinke einer Parksperreneinheit 9, in das erste Teilgetriebe 6 dieses sperrend eingreift, wobei die teilweise bis vollständig eingekuppelte Teilkupplung 4 des ersten Teilgetriebes 6 betätigt wird, so dass das Kupplungsmoment in Abhängigkeit des Einkupplungsgrades bzw. des Einkupplungsweges bestimmt wird.

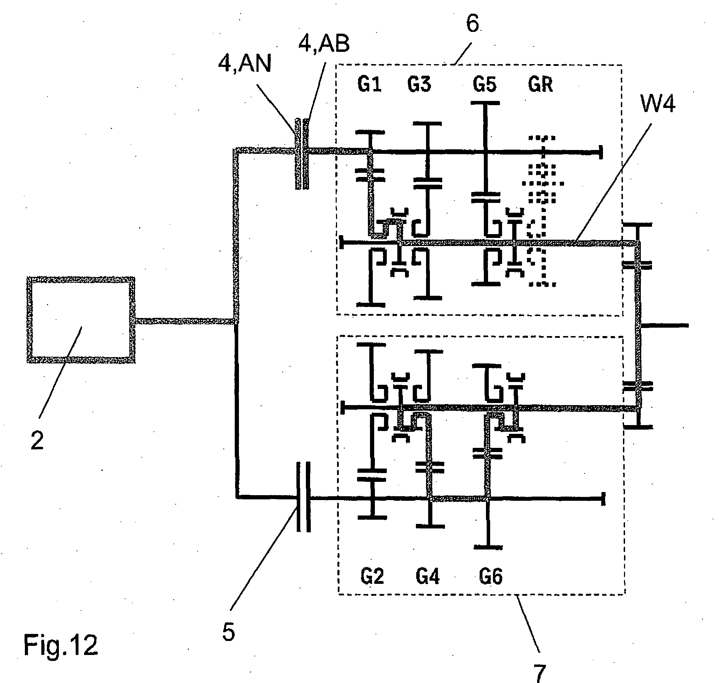

In Figur 12 ist eine zweite Variante der erfindungsgemäßen Bestimmung einer Kupplungskennlinie einer einzelnen Teilkupplung eines Doppelkupplungsgetriebes zu erkennen, wobei mittels einer motorischen Antriebseinheit 2 ein Drehmoment auf die erste Teilkupplung 4 gegeben wird, die teilweise eingekuppelt ist, wobei ein erster Gang G1 des ersten Teilgetriebes 6 eingelegt ist und ein vierter Gang G4 und ein sechster Gang G6 eines zweiten Teilgetriebes 7 eingelegt sind, wobei eine zweite Teilkupplung 5 des zweiten Teilgetriebes 7 ausgekuppelt ist, wobei in dieser Konstellation das Kupplungsmoment in Abhängigkeit des Einkupplungsgrades bzw. des Einkupplungsweges der ersten Kupplung 4 bestimmt wird.

Nachfolgend werden nochmals allgemein verschiedene Ausführungsformen der vorliegenden Erfindung offenbart:

### Erste Ausführungsform:

Getriebeverspannendes Verfahren zum Messen und Prüfen eines mindestens zwei Teilgetriebe aufweisenden Getriebes, insbesondere eines Doppelkupplungsgetriebes 1, bei dem mittels einer bezüglich des Getriebes 1 externen und bezüglich eines Fahrbetriebs der Antriebseinheit 2 ein Drehmoment in das Getriebe 1 eingeleitet wird, dadurch gekennzeichnet, dass das Getriebe 1 in einen Betriebszustand gebracht wird, in dem das eingeleitete Drehmoment mittels mindestens eines Bauteiles des Getriebes 1 aufgenommen wird, derart, dass die Messung bzw. Prüfung frei von einer bezüglich des Getriebes 1 externen und bezüglich eines Fahrbetriebes Abtriebseinheit 3 ausgeführt wird.

### Zweite Ausführungsform:

Verfahren gemäß der ersten Ausführungsform, wobei bei einem NVH-Test ein schlupfbehafteter Abtrieb in mindestens einer Teilkupplung 4,5 des Getriebes 1 erzeugt wird durch schlupfbehaftetes, teilweises Einkuppeln mindestens einer Teilkupplung 4,5 eines Teilgetriebes 6,7, wobei in jedem Teilgetriebe 6,7 ein Gang G1-G7, GR eingelegt ist, wobei a) die eine Teilkupplung 4 des ersten Teilgetriebes 6 schlupfbehaftet, teilweise eingekuppelt ist und die eine Teilkupplung 5 des zweiten Teilgetriebes 7 schlupffrei, teilweise bis vollständig eingekuppelt ist und keine Teilkupplung 4,5 ausgekuppelt ist, oder b) die eine Teilkupplung 5 des zweiten Teilgetriebes 7 schlupfbehaftet, teilweise eingekuppelt ist und die eine Teilkupplung 4 des ersten Teilgetriebes 6 schlupffrei, teilweise bis vollständig eingekuppelt ist und keine Teilkupplung 4,5 ausgekuppelt ist.

### Dritte Ausführungsform:

Verfahren gemäß der zweiten Ausführungsform, wobei a) zunächst Variante a) der zweiten Ausführungsform und anschließend Variante b) der zweiten Ausführungsform oder b) zunächst Variante b) der zweiten Ausführungsform und anschließend Variante a) der zweiten Ausführungsform durchgeführt wird.

### Vierte Ausführungsform:

Verfahren gemäß der ersten Ausführungsform, wobei bei einem Parksperrentest ein Sperrelement 8 in ein Teilgetriebe 6,7 dieses sperrend eingreift, wobei die Antriebseinheit 2 über dieses Teilgetriebe 6,7 die Parksperreneinheit verspannt, wobei ein Gang G1-G7, GR dieses Teilgetriebes 6,7 eingelegt ist und eine Teilkupplung 4,5 dieses Teilgetriebes 6,7 schlupfbehaftet oder schlupffrei, teilweise bis vollständig eingekuppelt ist.

### Fünfte Ausführungsform:

Verfahren gemäß der ersten Ausführungsform, dadurch gekennzeichnet, dass bei einem Parksperrentest a) mindestens zwei Gänge G1-G7, GR eines zweiten Teilgetriebes 7 eingelegt sind und ein Gang G1-G7, GR eines ersten Teilgetriebes 6 eingelegt ist und die Teilkupplung 4 des ersten Teilgetriebes 6 schlupfbehaftet oder schlupffrei, teilweise bis vollständig eingekuppelt ist, oder b) mindestens zwei Gänge G1-G7, GR eines ersten Teilgetriebes 6 eingelegt sind und ein Gang G1-G7, GR eines zweiten Teilgetriebes 7 eingelegt ist und die Teilkupplung 5 des zweiten Teilgetriebes 7 schlupfbehaftet oder schlupffrei, teilweise bis vollständig eingekuppelt ist.

### Sechste Ausführungsform:

Verfahren gemäß der ersten Ausführungsform, dadurch gekennzeichnet, dass bei einer Aufnahme einer Kupplungskennlinie einer Teilkupplung 4, 5 in einem Teilgetriebe 6, 7 des Getriebes 1 ein schlupfbehafteter Abtrieb einer Teilkupplung 4, 5 des Getriebes 1 erzeugt wird durch schlupfbehaftetes, teilweises Einkuppeln einer Teilkupplung 4, 5 eines Teilgetriebes 6, 7, wobei in jedem Teilgetriebe 6, 7 ein Gang 61-67, 68 eingelegt ist, wobei a) die eine Teilkupplung 4 des ersten Teilgetriebes 6 schlupfbehaftet, teilweise eingekuppelt ist und die eine Teilkupplung 5 des zweiten Teilgetriebes 7 schlupffrei, teilweise bis vollständig eingekuppelt ist und keine Teilkupplung 4, 5 ausgekuppelt ist, wobei das Kupplungsmoment in Abhängigkeit des Einkupplungsgrades bzw. des Einkupplungsweges bestimmt wird, oder b) die eine Teilkupplung 5 des zweiten Teilgetriebes 7 schlupfbehaftet, teilweise eingekuppelt ist und die eine Teilkupplung 4 des ersten Teilgetriebes 6 schlupffrei, teilweise bis vollständig eingekuppelt ist und keine Teilkupplung 4, 5 ausgekuppelt ist, wobei das Kupplungsmoment in Abhängigkeit des Einkupplungsgrades bzw. des Einkupplungsweges bestimmt wird.

### Siebte Ausführungsform:

Verfahren gemäß der ersten Ausführungsform, dadurch gekennzeichnet, dass bei einer Aufnahme einer Kupplungskennlinie einer Teilkupplung in einem Teilgetriebe 6,7 mindestens zwei Gänge G1-G7, GR des einen Teilgetriebes 6,7 eingelegt sind, wobei die Teilkupplung 4,5 des Teilgetriebes 6,7 schlupfbehaftet, teilweise bis vollständig eingekuppelt ist und das von der externen Antriebseinheit erzeugte Kupplungsmoment in Abhängigkeit des Einkupplungsgrades bzw. des Einkupplungsweges bestimmt wird.

### Achte Ausführungsform:

Verfahren gemäß der ersten Ausführungsform, dadurch gekennzeichnet, dass bei einer Aufnahme einer Kupplungskennlinie einer Teilkupplung in einem Teilgetriebe 6,7 mindestens ein Gang G1-G7, GR des einen Teilgetriebes 6,7 eingelegt ist, und ein Sperrelement 8 in das Teilgetriebe 6,7 dieses sperrend eingreift, wobei die Teilkupplung 4,5 des Teilgetriebes 6,7 schlupfbehaftet, zumindest teilweise eingekuppelt ist und das von der externen Antriebseinheit erzeugte Kupplungsmoment in Abhängigkeit des Einkupplungsgrades bzw. des Einkupplungsweges bestimmt wird.

### Neunte Ausführungsform:

Verfahren gemäß der ersten Ausführungsform, dadurch gekennzeichnet, dass bei einer Aufnahme einer Kupplungskennlinie in einem Teilgetriebe 6,7 mindestens ein Gang G1-G7, GR des einen Teilgetriebes 6,7 eingelegt ist und mindestens zwei Gänge G1-G7, GR eines weiteren Teilgetriebes 6,7 eingelegt sind, a) wobei eine Teilkupplung 5 des weiteren Teilgetriebes 7 ausgekuppelt ist, wobei eine Teilkupplung 4 des einen Teilgetriebes 6 schlupfbehaftet, teilweise bis vollständig eingekuppelt ist und das Kupplungsmoment in Abhängigkeit des Einkupplungsgrades bzw. des Einkupplungsweges bestimmt wird, oder b) eine Teilkupplung 4 des einen Teilgetriebes 6 ausgekuppelt ist, wobei eine Teilkupplung 5 des weiteren Teilgetriebes 7 schlupfbehaftet, teilweise bis vollständig eingekuppelt ist und das Kupplungsmoment in Abhängigkeit des Einkupplungsgrades bzw. des Einkupplungsweges bestimmt wird.

### Zehnte Ausführungsform:

Getriebe-Prüf- und Messvorrichtung, mit einer das zu prüfende, mindestens zwei Teilgetriebe 6,7 aufweisende Getriebe, insbesondere Doppelkupplungsgetriebe 1, antreibenden Antriebseinheit 2, wobei die Vorrichtung frei ist von einer bezüglich des zu prüfenden Getriebes 1 externen und bezüglich eines Fahrbetriebes Abtriebseinheit 3.

### Elfte Ausführungsform:

Vorrichtung gemäß der zehnten Ausführungsform, wobei diese derart eingerichtet ist, dass während eines getriebeverspannenden Verfahrens zum Messen und Prüfen eines mindestens zwei Teilgetriebe 6,7 aufweisenden Getriebes, insbesondere Doppelkupplungsgetriebes 1, mittels einer bezüglich des Getriebes 1 externen Antriebseinheit 2 ein Drehmoment in das Getriebe 1 eingeleitet wird, wobei das Getriebe 1 in einen Betriebszustand gebracht wird oder bringbar ist, in dem das eingeleitete Drehmoment mittels mindestens eines Bauteiles des Getriebes 1 aufgenommen wird, derart, dass die Messung bzw. Prüfung frei von einer bezüglich des Getriebes externen und bezüglich eines Fahrbetriebs Antriebseinheit ausgeführt wird oder ausführbar ist.

### Zwölfte Ausführungsform:

Vorrichtung gemäß einer der zehnten oder elften Ausführungsform, wobei diese derart eingerichtet ist, dass während des Betriebs das Verfahren nach einer der ersten bis neunten Ausführungsform durchgeführt wird oder durchführbar ist.

### Dreizehnte Ausführungsform:

Verwendung eines mindestens zwei Teilgetriebe aufweisenden Getriebes, insbesondere eines Doppelkupplungsgetriebes, zur Durchführung des Verfahrens nach einer der ersten bis neunten Ausführungsform.

### Vierzehnte Ausführungsform:

Verwendung eines mindestens zwei Teilgetriebe aufweisenden Getriebes, insbesondere eines Doppelkupplungsgetriebes, in einer Vorrichtung nach einer der zehnten bis zwölften Ausführungsform.

## Patentansprüche

1. Verfahren zum Prüfen eines Getriebes (1), insbesondere eine Doppelkupplungsgetriebes, wobei mittels einer bezüglich des Getriebes (1) externen Antriebseinheit (2) ein Drehmoment in das Getriebe (1) eingeleitet wird, **dadurch gekennzeichnet, dass** das Getriebe (1) in einen Betriebszustand versetzt wird, in welchem eine interne Komponente des Getriebes (1) als Bremse zur Simulation einer Abtriebseinheit fungiert.

2. Verfahren nach Anspruch 1, wobei das Getriebe (1) eine Kupplung aufweist, welche teilweise eingekuppelt wird, um als Bremse, insbesondere Reibbremse, zu fungieren.

3. Verfahren nach Anspruch 1, wobei das Getriebe (1) eine erste Teilkupplung (4, 5) und eine zweite Teilkupplung (4, 5) umfasst, wobei die erste Teilkupplung (4, 5) einem ersten Teilgetriebe (6, 7) des Getriebes (1) zugeordnet ist und die zweite Teilkupplung (4, 5) einem zweiten Teilgetriebe (6, 7) des Getriebes (1) zugeordnet ist, wobei die erste Teilkupplung (4, 5) vollständig eingekuppelt wird, um das Drehmoment auf das erste Teilgetriebe (6, 7) zu übertragen, und wobei sowohl ein Gang des ersten Teilgetriebes (6, 7), als auch ein Gang des zweiten Teilgetriebes (6, 7) eingelegt werden, um das Drehmoment vom ersten Teilgetriebe (6, 7) auf das zweite Teilgetriebe (6, 7) zu übertragen, und wobei die zweite Teilkupplung (4, 5) teilweise eingekuppelt wird, um als Reibbremse zu fungieren.

4. Verfahren nach Anspruch 3, wobei zur Aufnahme einer Kupplungskennlinie die zweite Teilkupplung (4, 5) soweit eingekuppelt wird, dass die zweite Teilkupplung (4, 5) gerade schlupffrei ist, und sodann ein Kupplungsmoment in Abhängigkeit des Einkupplungsgrades bestimmt wird.

5. Verfahren nach einem der Ansprüche 3 oder 4, wobei zum Wechsel zwischen einem Zug- und Lastbetrieb die erste Teilkupplung (4, 5) von der vollständigen Einkupplung in die teilweise Einkupplung und die zweite Teilkupplung (4, 5) von der teilweisen Einkupplung in die vollständige Einkupplung überführt werden.

6. Verfahren zum Prüfen eines Getriebes (1) nach einem der vorhergehenden Ansprüche oder nach dem Oberbegriff des Anspruchs 1, wobei das Getriebe (1) in einen Betriebszustand gebracht wird, in welchem das Getriebe (1) mittels wenigstens einer internen Komponente des Getriebes (1) blockiert wird, wobei die Blockierung zur Durchführung eines Parksperrentests vorgesehen ist, in welchem geprüft wird, ob das Getriebe im Parkzustand bis zu einem definierten Maximalparkdrehmoment gesperrt bleibt

7. Verfahren nach Anspruch 6, wobei die wenigstens eine interne Komponente eine Parksperre (8) des Getriebes (1) ist, welche in eine das Getriebe (1) sperrende Parkposition gebracht wird.

8. Verfahren nach Anspruch 6, wobei zur Blockierung des Getriebes (1) wenigstens zwei Gänge des Getriebes (1) gleichzeitig eingelegt werden.

9. Verfahren nach Anspruch 8, wobei das Getriebe (1) eine erste Teilkupplung (4, 5) und eine zweite Teilkupplung (4, 5) umfasst, wobei die erste Teilkupplung (4, 5) einem ersten Teilgetriebe (6, 7) des Getriebes (1) zugeordnet ist und die zweite Teilkupplung (4, 5) einem zweiten Teilgetriebe (6, 7) des Getriebes (1) zugeordnet ist, wobei die erste Teilkupplung (4, 5) vollständig eingekuppelt wird und wobei ein Gang des ersten Teilgetriebe (6, 7) eingelegt wird und wobei zur Blockierung des Getriebes (1) wenigstens zwei Gänge des zweiten Teilgetriebes (6, 7) gleichzeitig eingelegt werden.

10. Verfahren nach einem der vorhergehenden Ansprüche, wobei das von der Antriebseinheit (2) eingeleitete Drehmoment ausgewertet wird.

11. Verfahren nach einem der vorhergehenden Ansprüche, wobei eine NVH-Geräuschmessung durchgeführt wird.

12. Prüfstand zum Prüfens eines Getriebes (1), insbesondere zur Durchführung eines Verfahrens nach einem der vorhergehenden Ansprüche, wobei der Prüfstand eine Antriebseinheit (2) zum Einleiten eines Drehmoments in das Getriebe (1) aufweist und wobei der Prüfstand zum Steuern einer Kupplung des Getriebes (1) und zum Schalten von Gängen des Getriebes (1) vorgesehen ist, **dadurch gekennzeichnet, dass** der Prüfstand zum Beschalten des Getriebes derart konfiguriert ist, dass eine interne Komponente des Getriebes (1) als Bremse zur Simulation einer Abtriebseinheit fungiert.

13. Prüfstand nach Anspruch 12, wobei der Prüfstand derart konfiguriert ist, dass eine erste Teilkupplung (4, 5) des Getriebes (1) vollständig eingekuppelt und ein Gang eines der ersten Teilkupplung (4, 5) zugeordneten ersten Teilgetriebes (6, 7) eingelegt wird und dass eine zweite Teilkupplung (4, 5) des Getriebes (1) teilweise eingekuppelt und ein Gang eines der zweiten Teilkupplung (4, 5) zugeordneten zweiten Teilgetriebes (6, 7) eingelegt wird.

14. Prüfstand nach Anspruch 13, wobei der Prüfstand zum Einkuppeln der zweiten Teilkupplung (4, 5) derart vorgesehen ist, dass die zweite Teilkupplung (4, 5) gerade schlupffrei ist, wobei der Prüfstand ferner zur Messung des Einkupplungsgrades der zweiten Teilkupplung (4, 5) vorgesehen ist,

15. Prüfstand nach einem der Ansprüche 12 bis 14, wobei der Prüfstand Körperschallsensoren zur Durchführung einer NVH-Geräuschmessung und einen Drehmomentaufnehmer zur Vermessung des in das Getriebe (1) eingeleiteten Drehmoments aufweist.

## Claims

1. Method for the testing of a transmission (1), in particular a dual-clutch transmission, wherein a torque is introduced into the transmission (1) by means of a drive unit (2) which is external with respect to the transmission (1), **characterized in that** the transmission (1) is placed into an operating state in which an internal component of the transmission (1) functions as a brake for simulation of an output unit.

2. Method according to Claim 1, wherein the transmission (1) has a clutch which is partially engaged in order to function as a brake, in particular a friction brake.

3. Method according to Claim 1, wherein the transmission (1) comprises a first component clutch (4, 5) and a second component clutch (4, 5), wherein the first component clutch (4, 5) is assigned to a first component transmission (6, 7) of the transmission (1), and the second component clutch (4, 5) is assigned to a second component transmission (6, 7) of the transmission (1), wherein the first component clutch (4, 5) is fully engaged in order to transmit the torque to the first component transmission (6, 7), and wherein both a gear of the first component transmission (6, 7) and also a gear of the second component transmission (6, 7) are engaged in order to transmit the torque from the first component transmission (6, 7) to the second component transmission (6, 7), and wherein the second component clutch (4, 5) is partially engaged in order to function as a friction brake.

4. Method according to Claim 3, wherein, for recording of a clutch characteristic curve, the second component clutch (4, 5) is engaged to such an extent that the second component clutch (4, 5) is just free from slip, and a clutch torque is then determined as a function of the degree of clutch engagement.

5. Method according to either of Claims 3 and 4, wherein, for switching between traction operation and operation under load, the first component clutch (4, 5) is transferred from the fully engaged state into the partially engaged state, and the second component clutch (4, 5) is transferred from the partially engaged state into the fully engaged state.

6. Method for testing a transmission (1) according to one of the preceding claims or as per the preamble of Claim 1, wherein the transmission (1) is placed into an operating state in which the transmission (1) is blocked by means of at least one internal component of the transmission (1), the blocking action being provided for carrying out a parking lock test, in which a test is carried out as to whether the transmission remains blocked in the parked state up to a defined maximum parking torque.

7. Method according to Claim 6, wherein the at least one internal component is a parking lock (8) of the transmission (1), which parking lock is placed into a park position which locks the transmission (1).

8. Method according to Claim 6, wherein, for the blocking of the transmission (1), at least two gears of the transmission (1) are engaged simultaneously.

9. Method according to Claim 8, wherein the transmission (1) comprises a first component clutch (4, 5) and a second component clutch (4, 5), wherein the first component clutch (4, 5) is assigned to a first component transmission (6, 7) of the transmission (1) and the second component clutch (4, 5) is assigned to a second component transmission (6, 7) of the transmission (1), wherein the first component clutch (4, 5) is fully engaged and wherein a gear of the first component transmission (6, 7) is engaged and wherein, for the blocking of the transmission (1), at least two gears of the second component transmission (6, 7) are engaged simultaneously.

10. Method according to one of the preceding claims, wherein the torque introduced by the drive unit (2) is evaluated.

11. Method according to one of the preceding claims, wherein an NVH noise measurement is performed.

12. Test stand for testing a transmission (1), in particular for carrying out a method according to one of the preceding claims, wherein the test stand has a drive unit (2) for introducing a torque into the transmission (1), and wherein the test stand is provided for controlling a clutch of the transmission (1) and for shifting gears of the transmission (1), **characterized in that** the test stand is configured for performing shifts in the transmission such that an internal component of the transmission (1) functions as a brake for simulation of an output unit.

13. Test stand according to Claim 12, wherein the test stand is configured such that a first component clutch (4, 5) of the transmission (1) is fully engaged and a gear of a first component transmission (6, 7) assigned to the first component clutch (4, 5) is engaged, and such that a second component clutch (4, 5) of the transmission (1) is partially engaged and a gear of a second component transmission (6, 7) assigned to the second component clutch (4, 5) is engaged.

14. Test stand according to Claim 13, wherein the test stand is provided for engaging the second component clutch (4, 5) such that the second component clutch (4, 5) is just free from slip, wherein the test stand is furthermore provided for measuring the degree of clutch engagement of the second component clutch (4, 5).

15. Test stand according to one of Claims 12 to 14, wherein the test stand has structure-borne noise sensors for performing an NVH noise measurement and has a torque sensor for measuring the torque introduced into the transmission (1).

## Revendications

1. Procédé pour contrôler une boîte de vitesses (1), en particulier une boîte de vitesses à double embrayage, dans lequel on introduit, au moyen d'une unité d'entraînement (2) externe par rapport à la boîte de vitesses (1), un couple de rotation dans la boîte de vitesses (1), **caractérisé en ce que** l'on place la boîte de vitesses (1) dans un état de fonctionnement, dans lequel un composant interne de la boîte de vitesses (1) fonctionne comme frein pour la simulation d'une unité de sortie.

2. Procédé selon la revendication 1, dans lequel la boîte de vitesses (1) présente un embrayage, qui est partiellement engagé, pour fonctionner comme frein, en particulier comme frein à friction.

3. Procédé selon la revendication 1, dans lequel la boîte de vitesses (1) comprend un premier embrayage partiel (4, 5) et un deuxième embrayage partiel (4, 5), dans lequel le premier embrayage partiel (4, 5) est associé à une première boîte de vitesses partielle (6, 7) de la boîte de vitesses (1) et le deuxième embrayage partiel (4, 5) est associé à une deuxième boîte de vitesses partielle (6, 7) de la boîte de vitesses (1), dans lequel le premier embrayage partiel (4, 5) est entièrement engagé pour transmettre le couple de rotation à la première boîte de vitesses partielle (6, 7), et dans lequel aussi bien une vitesse de la première boîte de vitesses partielle (6, 7) qu'une vitesse de la deuxième boîte de vitesses partielle (6, 7) sont enclenchées, pour transmettre le couple de rotation de la première boîte de vitesses partielle (6, 7) à la deuxième boîte de vitesses partielle (6, 7), et dans lequel le deuxième embrayage partiel (4, 5) est partiellement engagé, pour fonctionner comme frein à friction.

4. Procédé selon la revendication 3, dans lequel, pour l'enregistrement d'une courbe caractéristique de l'embrayage, on engage le deuxième embrayage partiel (4, 5) de telle manière que le deuxième embrayage partiel (4, 5) soit juste sans patinage, et on détermine ensuite un couple d'embrayage en fonction du degré d'engagement de l'embrayage.

5. Procédé selon l'une des revendications 3 ou 4, dans lequel, pour le changement entre un fonctionnement de traction et de charge, on transfère le premier embrayage partiel (4, 5) de l'engagement total à l'engagement partiel et le deuxième embrayage partiel (4, 5) de l'engagement partiel à l'engagement total.

6. Procédé pour contrôler une boîte de vitesses (1) selon l'une quelconque des revendications précédentes ou selon le préambule de la revendication 1, dans lequel on place la boîte de vitesses (1) dans un état de fonctionnement, dans lequel la boîte de vitesses (1) est bloquée au moyen d'au moins un composant interne de la boîte de vitesses (1), dans lequel le blocage est prévu pour l'exécution d'un test de frein de stationnement, dans lequel on contrôle si la boîte de vitesses reste bloquée dans l'état de stationnement jusqu'à un couple de rotation de stationnement maximal défini.

7. Procédé selon la revendication 6, dans lequel ledit au moins un composant interne est un frein de stationnement (8) de la boîte de vitesses (1), que l'on place dans une position de stationnement bloquant la boîte de vitesses (1).

8. Procédé selon la revendication 6, dans lequel on enclenche simultanément au moins deux vitesses de la boîte de vitesses (1) pour le blocage de la boîte de vitesses (1).

9. Procédé selon la revendication 8, dans lequel la boîte de vitesses (1) comprend un premier embrayage partiel (4, 5) et un deuxième embrayage partiel (4, 5), dans lequel le premier embrayage partiel (4, 5) est associé à une première boîte de vitesses partielle (6, 7) de la boîte de vitesses (1) et le deuxième embrayage partiel (4, 5) est associé à une deuxième boîte de vitesses partielle (6, 7) de la boîte de vitesses (1), dans lequel on engage entièrement le premier embrayage partiel (4, 5) et dans lequel on enclenche une vitesse de la première boîte de vitesses partielle (6, 7) et dans lequel on enclenche simultanément au moins deux vitesses de la deuxième boîte de vitesses partielle (6, 7) pour le blocage de la boîte de vitesses (1).

10. Procédé selon l'une quelconque des revendications précédentes, dans lequel on évalue le couple de rotation introduit par l'unité d'entraînement (2).

11. Procédé selon l'une quelconque des revendications précédentes, dans lequel on effectue une mesure de bruit NVH.

12. Banc d'essai pour le contrôle d'une boîte de vitesses (1), en particulier pour la mise en oeuvre d'un procédé selon l'une quelconque des revendications précédentes, dans lequel le banc d'essai présente une unité d'entraînement (2) pour introduire un couple de rotation dans la boîte de vitesses (1) et dans lequel le banc d'essai est prévu pour commander un embrayage de la boîte de vitesses (1) et pour enclencher des vitesses de la boîte de vitesses (1), **caractérisé en ce que** le banc d'essai est configuré pour commuter la boîte de vitesses (1) de telle manière qu'un composant interne de la boîte de vitesses (1) fonctionne comme frein pour la simulation d'une unité de sortie.

13. Banc d'essai selon la revendication 12, dans lequel le banc d'essai est configuré de telle manière qu'un premier embrayage partiel (4, 5) de la boîte de vitesses (1) soit entièrement engagé et qu'une vitesse d'une première boîte de vitesses partielle (6, 7) associée au premier embrayage partiel (4, 5) soit enclenchée et qu'un deuxième embrayage partiel (4, 5) de la boîte de vitesses (1) soit partiellement engagé et qu'une vitesse d'une deuxième boîte de vitesses partielle (6, 7) associée au deuxième embrayage partiel (4, 5) soit enclenchée.

14. Banc d'essai selon la revendication 13, dans lequel le banc d'essai est prévu pour l'engagement du deuxième embrayage partiel (4, 5), de telle manière que le deuxième embrayage partiel (4, 5) soit juste sans patinage, dans lequel le banc d'essai est en outre prévu pour la mesure du degré d'engagement du deuxième embrayage partiel (4, 5).

15. Banc d'essai selon l'une quelconque des revendications 12 à 14, dans lequel le banc d'essai présente des détecteurs de bruits de structure pour l'exécution d'une mesure de bruit NVH et un enregistreur de couple de rotation pour la mesure du couple de rotation introduit dans la boîte de vitesses (1).
